Europäisches Patentamt

European Patent Office

Office européen des brevets

(19)

(11) Numéro de publication: **0 372 077**

**A1**

(12)

# DEMANDE DE BREVET EUROPEEN PUBLI E EN APPLICATION DE L'article 158, paragraphe 3 de la CBE

(21) Numéro de dépôt: 88907445.6

(22) Date de dépôt: 27.04.88

(86) Numéro de dépôt internationale :
PCT/SU88/00101

(87) Numéro de publication internationale :
WO 89/10278 (02.11.89 89/26)

(51) Int. Cl.⁵: **B60G 11/32**

(43) Date de publication de la demande:
**13.06.90 Bulletin 90/24**

(84) Etats contractants désignés:
**DE FR GB IT SE**

(71) Demandeur: **KIEVSKY INZHENERNO-STROITELNY INSTITUT Vozdukhoflotsky pr., 31 Kiev 252037(SU)**

(72) Inventeur: **AZAMATOV, Ramil Abdreevich Novy gorod, 17/03-98 Naberezhnye Chelny, 423823(SU)**
Inventeur: **ZAMITTER, Mikhail Naumovich ul. Aviakonstruktora Antonova, 2/32-4-18 Kiev, 252043(SU)**
Inventeur: **ZEMA, Evgeny Mikhailovich ul. Chekhova, 1b-1 Dnepropetrovskaya obl. Sinelnikovo, 323110(SU)**
Inventeur: **NEDOREZOV, Vladimir Afanasievich ul. Chekhova, 1-2 Dnepropetrovskaya obl. Sinelnikovo, 323110(SU)**
Inventeur: **OBLOVATSKY, Anatoly Konstantinovich ul. Mira, 33-10 Dnepropetrovskaya obl. Sinelnikovo, 323110(SU)**

(74) Mandataire: **Durand, Yves Armand Louis et al Cabinet Z. Weinstein 20, Avenue de Friedland F-75008 Paris(FR)**

(54) **SUSPENSION POUR ESSIEU DE ROUE DE VEHICULE.**

(57) La suspension se rapporte à un ressort principal (1) qui peut être constitué par une ou plusieurs lames de ressort.

Pour améliorer les qualités de fonctionnement du moyen de transport grâce à la variation adaptée de la raideur de la suspension, cette dernière est

dotée d'un ressort auxiliaire (7) constitué par une plaquette pouvant fléchir dans le plan de sa raideur maximale et ayant une forme en C dans le plan indiqué. Le ressort auxiliaire (7) est relié à l'essieu (8) du moyen de transport et au ressort principal (1) par l'intermédiaire de sa partie médiane de façon à pouvoir se déplacer facilement sous l'action de la charge dans la cage (11) présentant un espacement approprié.

FIG. 1

## Suspension d'un essieu pour les roues d'un moyen de transport

Domaine de l'invention

La présente invention concerne les suspensions pour les roues des moyens de transport tels que camions, comportant un ressort principal et un ressort auxiliaire.

Etat de la technique

On connaît une suspension d'un essieu des roues d'un moyen de transport (US,A,2304780) comportant un ressort principal et un ressort auxiliaire chacun desquels est associé par sa partie centrale à l'essieu supportant des roues et par ses extrémités, au cadre du moyen de transport, et un dispositif de mise en action et au repos du ressort auxiliaire. Le ressort principal et le ressort auxiliaire comportent, chacun, une série de lames de ressort et sont disposés l'un au-dessus de l'autre de façon que le ressort principal soit fixé par des étriers sur l'essieu supportant les roues d'un moyen de transport et que le ressort auxiliaire soit fixé au-dessus du ressort principal par l'intermédiaire des mêmes étriers. Le ressort auxiliaire est destiné à libérer le ressort principal d'une partie de la charge à laquelle il résiste lorsque le ressort principal est soumis à une déformation de valeur donnée. La liaison du ressort principal avec le cadre du moyen de transport est assurée de façon classique, notamment à l'axes pivotants. Le ressort auxiliaire est assemblé au cadre par l'intermédiaire des patins réglables présentant des surfaces de contact circulaires permettant auxdits patins de prendre appui sur les extrémités du ressort auxiliaire. Les patins sont montés sur le cadre de façon à pouvoir coulisser le long du cadre. La commande des patins peut être constituée par une tige, dont les extrémités sont filetées à gauche et à droite et sur lesquelles se déplacent les patins qui présentent des trous avec un filetage approprié. Dans le mode de réalisation donné, les patins peuvent se déplacer l'un vers l'autre jusqu'à arriver à une position à laquelle ils n'entrent pas en contact avec le ressort auxiliaire et, inversement, ils peuvent s'éloigner vers les extrémités de la tige filetée en se mettant en contact avec les extrémités du ressort auxiliaire. Les mouvements décrits des patins permettent, dans le premier cas, de réduire la contrainte du ressort auxiliaire jusqu'à son soulagement complet et, dans le deuxième cas, d'élever la contrainte jusqu'à la valeur maximale admissible pour la suspension donnée, c'est-à-dire de régler la contrainte.

Toutefois, l'utilisation de cette suspension révèle un inconvénient important concernant notamment sa caractéristique d'élasticité qui présente deux tronçons linéaires et ne peut pas être considérée comme optimale du fait qu'immédiatement après le passage sur le tonçon de plus grande courbure la raideur de la suspension augment considérablement. Il en résulte que la vitesse du moyen de transport, par exemple d'un camion, doit être réduite grandement en comparaison avec la vitesse d'un véhicule vide ou à charge faible, surtout sur des routes de classe inférieures, malgré le fait que la charge utile ne dépasse que légèrement la valeur théorique prévue pour le ressort principal.

La suspension connue se caractérise par une masse relativement grande, du fait que cette suspension est conçue pour une large gamme de charges et par conséquent impose l'utilisation des ressorts à lames.

Exposé de l'invention

On s'est donc proposé de mettre au point une suspension d'un essieu pour les roues d'un moyen de transport dans laquelle des modifications de forme du ressort auxiliaire et de la liaison entre l'essieu et le cadre permettraient d'améliorer les qualités de fonctionnement du moyen de transport grâce à la variation adaptée de la raideur de la suspension en cas de variation de la charge sur l'essieu des roues.

Le problème ainsi posé est résolu à l'aide d'une suspension d'essieu pour les roues d'un moyen de transport comprenant un ressort principal et un ressort auxiliaire chacun desquels est associé par sa partie médiane à l'essieu des roues et par ses extrémités au cadre du moyen de transport, et un moyen pour la mise en action et au repos du ressort auxiliaire, caractérisée, selon l'invention, en ce que le ressort auxiliaire est constitué par une tige fléchissant dans le plan de sa plus grande raideur et ayant une forme en C dans ce plan et que le moyen pour la mise en action et au repos du ressort auxiliaire est consituté par une cage liée à l'essieu des roues et présentant des surfaces de guidage et une surface d'appui du ressort auxiliaire de sorte que ce dernier puisse se déplacer entre l'essieu des roues et la surface d'appui en cas de variation de la charge.

De plus, il est avantageux que la partie convexe de la surface d'appui de la cage soit tournée vers le ressort auxiliaire.

Par comparaison avec l'état actuel de la technique, la suspension faisant l'objet de la présente invention présente un nombre d'avantages favorisant les qualités de fontionnement du moyen de transport et notamment la souplesse de marche. En utilisant un ressort à tige en C comme ressort auxiliaire on assure la variation adaptée de la raideur de la suspension dans le cas d'une variation de la charge agissant sur l'essieu. On peut ainsi utiliser comme ressort principal un ressort à lames, dont le nombre de lames est grandement réduit, ce qui aboutit à une diminution considérable de la masse de la suspension.

La partie convexe de la surface d'appui de la cage permet de réaliser une mise en action progressive du ressort auxiliaire et d'éviter la concentration des contraintes dans ce ressort.

Description succinte des dessins

L'invention sera mieux comprise et d'autre buts, détails et avantages de celle-ci apparaîtront mieux à la lecture de la description explicative qui va suivre de différents modes de réalisation donnés uniquement à titre d'exemples non limitatifs avec références aux dessins annexés dans lesquels :

La figure 1 représente une suspension d'un essieu pour les roues d'un moyen de transport, selon un exemple de réalisation de l'invention, en état déchargé;

La figure 2 représente la suspension de la figure 1, subissant l'action d'une charge statique;

La figure 3 représente la supension de la figure 1, soumise à la charge maximale;

La figure 4 illustre un autre exemple de réalisation de la suspension conforme à l'invention dans laquelle le ressort auxiliaire est disposé au-dessus du ressort principal, la suspension étant déchargée;

La figure 5 représente la suspension de la figure 4, soumise à l'action de la charge statique;

La figure 6 représente la suspension de la figure 4, soumise à la charge maximale;

La figure 7 illustre encore un autre exemple de réalisation de la suspension dans laquelle le ressort auxiliaire se situe au même niveau avec le ressort principal;

La figure 8 est une coupe suivant la ligne VIII-VIII sur la figure 7.

Meilleure variante de réalisation de l'invention

L'invention qui peut trouver l'application dans les moyens de transport tels que camions, est décrite en plusieurs variantes.

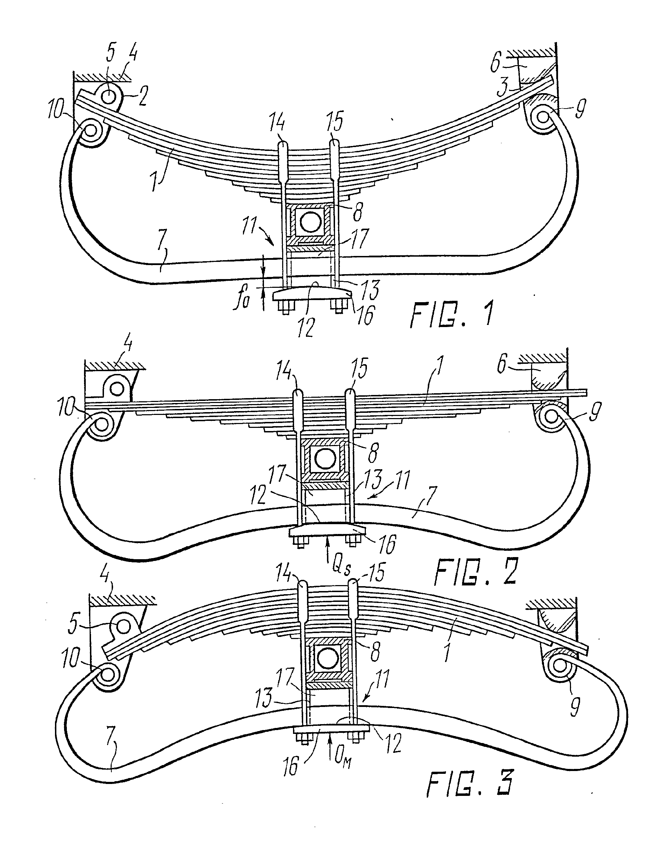

La suspension selon le mode de réalisation illustré à l'aide de la figure 1 comporte un ressort principal 1 à lames associé par l'intermédiaire des pattes d'attache 2 et 3 au cadre 4 constituant la partie suspendue du moyen de transport. Cette association est réalisée à l'aide d'un pivot 5 et d'un guidage en translation et en rotation avec un appui 6. La suspension comprend également un ressort auxiliaire 7 à plaquette en C qui peut fléchir dans le plan de sa raideur maximale et qui est liée d'une manière mobile par sa partie médiane à l'essieu 8 des roues du moyen de transport. Les extrémités du ressort 7 portent des oreilles 9 et 10 pour assemblage par articulation avec les éléments d'appui sur la partie suspendue du moyen de transport. Le moyen pour la mise en action et au repos du ressort auxiliaire est constitué par une cage 11 présentant une surface d'appui convexe 12 tournée vers le ressort 7 et des surfaces de guidage 13 limitant les espacements dans lesquels est engagé le ressort 7 de façon à pouvoir se déplacer entre la surface d'appui 12 et l'essieu 8 du moyen de transport en cas de variation de la charge, comme cela sera mis en évidence grâce à la description du fonctionnement de la suspension conforme au présent exemple de réalisation de l'invention. Comme on le voit sur la figure 1, le ressort 1 est associé par son milieu à l'essieu 8 à l'aide des étriers 14 et 15 assemblés grâce à un appui 16 comportant la surface d'appui 12 mentionnée plus haut. Une pièce d'écartement 17 comportant des surfaces de guidage 13, est placée entre les étriers 14 et 15. Ainsi, dans le présent exemple de réalisation de l'invention, la cage 11 est formée par les étriers 14 et 15, la pièce d'écartement 17 et l'appui 16.

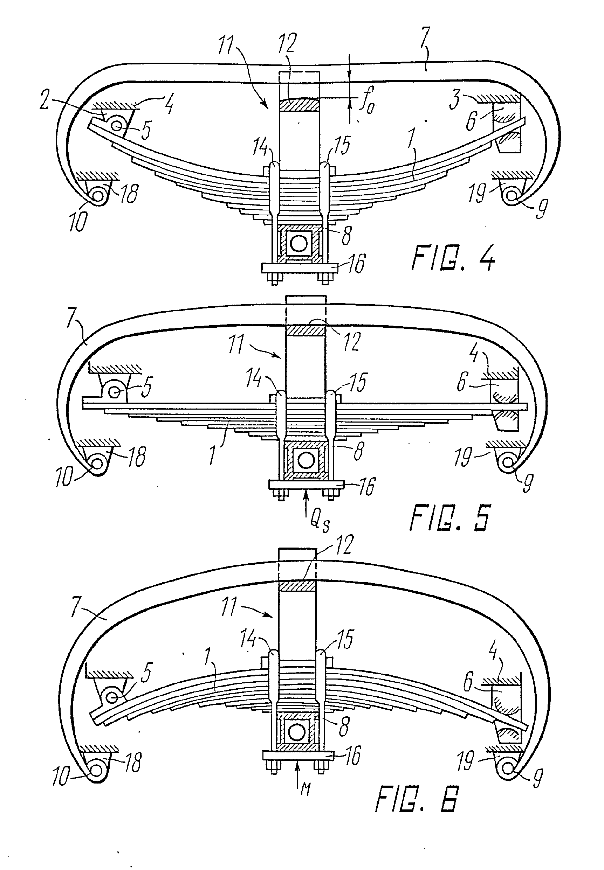

La suspension représentée sur la figure 4 diffère de la suspension représentée sur la figure 1 en ce que le ressort auxiliaire 7 et le moyen pour sa mise en action et au repos sont disposés au-dessus du ressort principal 1. Pour les raisons de construction, les pattes d'attache 18 et 19 du ressort auxiliaire 7 peuvent être confondues avec les pattes d'attache 2 et 3 respectivement du ressort principal 1 ou bien peuvent être fixées d'une façon isolée sur la partie suspendue du moyen de transport.

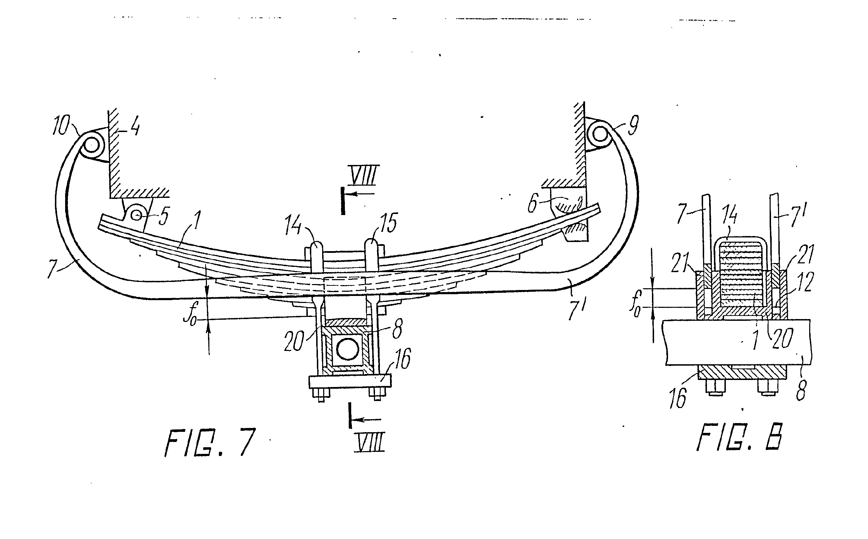

La suspension représentée sur la figure 7 comporte un ressort auxiliaire composé de deux ressorts à tige en C 7 et 7' disposés de part et d'autre du ressort à lames principal 1, au-dessus de l'essieu 8 (carter de pont) du moyen de transport. La surface d'appui 12 du moyen de mise en jeu du ressort auxiliaire est réalisée par une cale 20 analogue à l'appui 16 (figure 1), qui est assemblée, conjointement avec le ressort principal 1 disposé au-dessus de la cale, par rapport à l'essieu 8 par les étriers 14 et 15 à l'aide de l'appui 16 qui, dans le présent exemple, possède une surface d'appui plane. La cale 20 possède des parois 21 (figure 8) parallèles.

La suspension de l'essieu des roues pour un moyen de transport fonctionne de la façon suivante.

Initialement, lorsque la suspension n'est pas chargée (figure 1), il existe un espacement initial $f_o$ entre le ressort auxiliaire 7 et la surface d'appui 12 de l'appui 16. Pendant la phase initiale de chargement, tant que la couse de la suspension ne dépasse pas la valeur $f_o$, le ressort auxiliaire 7 descend, sans subir de déformation, avec le cadre 4 du moyen de transport, auquel il est articulé par l'intermédiaire des oreilles 9 et 10, Le tronçon médian du ressort auxiliaire 7 se déplace librement par rapport aux surfaces de guidage 13 de la cage 11, qui interdisent le déplacement transversal du ressort 7.

Toute la charge agissant sur la suspension est reçue uniquement par le ressort principal 1 et est transmise par les pattes d'attache 2 et 3 à la partie suspendue 4; en se redressant progressivement, le ressort principal 1 se déplace par rapport à son appui 6 et par rapport au tronçon médian du ressort auxiliaire 7 (figure 2).

Le ressort auxiliaire 7 se met en jeu après sa mise en contact avec la surface d'appui 12 et la charge à laquelle il s'oppose et qui agmente avec la course de la suspension provoque la déformation tant du tronçon médian du ressort 7 que de ses tronçons curvilignes d'extrémité. Lorsque ce ressort fléchit dans le plan de sa raideur maximale, la courbure de son tronçon médian et des tronçons d'extrémité devient plus grande. La suspension étant soumise à l'action d'une charge statique $Q_S$ (figure 2), le tronçon médian du ressort auxiliaire 7 n'est au contact de la surface 12 que dans la zone voisine de l'axe de symétrie de ce ressort et le bras de levier du moment de flexion agissant sur le ressort sera maximal.

La surface d'appui convexe 12 est réalisée de façon qu'à l'application d'une charge maximale $Q_M$ (figure 3) la déformation élastique du ressort 7 assure la portée complète sur cette surface et, pas conséquent, la diminution du bras de levier du moment de flexion dans la section sollicitée du ressort auxiliaire 7.

Cette particularité de construction et la variation non linéaire de la raideur du ressort auxiliaire 7, conditionnée par la variation progressive du bras du moment de flexion dans les sections sollicitées de ses tronçons cuvilignes, permettent d'obtenir la variation des caractéristiques d'élasticité de la suspension.

Le fonctionnement de la suspension représentée sur les figures 4, 5 et 6 ne diffère pas en principe du fonctionnement de la suspension décrite ci-dessus.

Il est avantageux d'utiliser cette suspension sur les moyens de transport possédant un encombrement suffisant pour loger le ressort auxiliaire 7 au-dessus du ressort principal 1. Toutefois, la caratéristique d'élasticité non linéaire du ressort auxiliaire 7 sera quelque peu différente du fait que les bras des moments de flexion dans les sections incurvées du ressort auxiliaire diminuent avec l'accroissement de la charge à partir de l'état initial (figure 4) jusqu'à la charge statique (figure 5) et à la charge maximale (figure 6).

Cette particularité de construction permet de réduire les contraintes dans les tronçons d'extrémité du ressort 7 ou, si besoin est, d'élever leur flexibilité et de réduire la masse grâce à la diminution des moments d'inertie et de la surface des sections.

La suspension représentée sur la figure 7 est analogue à la suspension représentée sur les figures 1,2,3 quant à son principe de fonctionnement, mais elle diffère par son organisation et à ceci de particulier qu'elle comporte un ressort auxiliaire constitué par deux ressorts à tige en C7 et 7' disposés de part et d'autre du ressort principal 1, au-dessus de l'essieu 8. Le ressort principal 1 est fixé, conjointement avec la partie médiane des ressorts auxiliaires 7 et 7', à l'essieu 8 par les étriers 14,15 et l'appui 16.

La suspension étant en état déchargé, on règle entre les ressorts auxiliaires 7,7' et la surface d'appui convexe 12 de l'appui 16, un espacement initial $f_o$ déterminant la valeur de la charge pour laquelle les ressorts auxiliaires 7 et 7' commencent à fonctionner en association avec le ressort principal 1.

Pendant le fonctionnement de la suspension le déplacement latéral des ressorts auxiliaires est limité par les parois 21 (figure 8).

L'utilisation des réalisations de suspension décrites est rationnelle dans les cas où l'encombrement sous le carter de pont est délimité par une garde au sol convenable.

En comparaison avec suspensions connues comprenant des ressorts à lames auxiliaires les avantages de l'invention consistent en ce qu'elles offrent la possibilité d'obtenir une variation non linéaire de la caractéristique d'élasticité de la suspension afin d'améliorer considérablement les qualités de fonctionnement du moyen de transport. De plus, cela contribue à la diminution notable de la main-d'oeuvre nécessaire à la fabrication et là l'assemblage du ressort auxiliaire. Notamment, la comparaison des suspensions décrites avec la suspension utilisant un ressort auxiliaire à huit lames qui, de ce fait, présente quelques difficultés d'assemblage, permet de voir que les ressorts auxiliaires des suspensions revendiquées peuvent comprendre un ou deux lames ce qui rend extrêmement facile leur assemblage et leur association avec les pièces conjuguées.

Un avantage important de l'invention se traduit par la possibilité de réaliser un ressort auxiliaire ayant une masse très réduite.

Applicabilité industrielle

La suspension d'un essieu pour les roues d'un moyen de transport trouve son application, par exemple, dans les camions ou les moyens de transport analogues comprenant un ressort principal portant le cadre par l'intermédiaire de l'essieu et un ressort auxiliaire qui supporte une partie de la charge agissant sur le ressort principal.

Revendications

1. Suspension d'un essieu pour les roues d'un moyen de transport comportant un ressort principal (1) et un ressort auxiliaire (7) chacun desquels est relié par sa partie médiane à l'essieu (8) et par ses extrémités au cadre (4) du moyen de transport et un moyen pour la mise en action et au repos du ressort auxiliaire (7), caractérisée en ce que le ressort auxiliaire (7) est constitué par une tige pouvant fléchir dans le plan de sa raideur maximale et ayant une forme en C dans le plan mentionné et en ce que le moyen de mise en action et au repos du ressort auxiliaire (7) est constitué par une cage (11) réliée à l'essieu (8) et présentant des surfaces de guidage (13) et une surface d'appui (12) pour le ressort auxiliaire (7) de sorte que ce dernier ressort (7) puisse se déplacer entre l'essieu (8) supportant les roues et la surface d'appui (12) lorsque la charge varie.

2. Suspension selon la revendication 1, caractérisée en ce que la partie convexe de la surface d'appui (12) de la cage (11) est tournée vers le ressort auxiliaire (7).

FIG. 1

FIG. 2

FIG. 3

FIG. 4

FIG. 5

FIG. 6

FIG. 7

FIG. 8

# INTERNATIONAL SEARCH REPORT

International Application No PCT/SU 88/00101

## I. CLASSIFICATION OF SUBJECT MATTER (if several classification symbols apply, indicate all) ⁶

According to International Patent Classification (IPC) or to both National Classification and IPC

IPC⁴  B60G 11/32

## II. FIELDS SEARCHED

| Minimum Documentation Searched ⁷ | |
|---|---|
| Classification System | Classification Symbols |
| IPC⁴ | B60G 11/00   11/10,11/32   11/46 |

Documentation Searched other than Minimum Documentation
to the Extent that such Documents are Included in the Fields Searched ⁸

## III. DOCUMENTS CONSIDERED TO BE RELEVANT⁹

| Category * | Citation of Document, ¹¹ with indication, where appropriate, of the relevant passages ¹² | Relevant to Claim No. ¹³ |
|---|---|---|
| A | US, A, 2304780 (OTTO H. de FRIES) 15 December 1942 (15.12.42) (cited in the description) | 1 |
| A | GB, A, 2128714 (RUBERY OWEN HOLDINGS LIMITED)  2 May 1984 (02.05.84) see the abstract | 1 |
| A | DE, A1, 3204064 (HOESCH WERKE AG) 18 August 1983 (18.08.83) see page 6, figure 1 | 1 |

---

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 21 November 1988 (21.11.89) | 13 January 1989 (13.01.89) |
| International Searching Authority | Signature of Authorized Officer |
| ISA/SU | |

Form PCT/ISA/210 (second sheet) (January 1985)